# EUROPÄISCHE PATENTSCHRIFT

(11) **EP 2 825 951 B1**
(45) Veröffentlichungstag und Bekanntmachung des Hinweises auf die Patenterteilung: **16.05.2018**
(21) Anmeldenummer: 13710999.7
(22) Anmeldetag: 14.03.2013
(51) Int. Cl.: G06F 3/14, G06F 9/44, G06T 3/40

(54) **VERFAHREN, MOBILGERÄT UND INFOTAINMENTSYSTEM ZUM ÜBERTRAGEN EINER BENUTZEROBERFLÄCHE AUF EINEN BILDSCHIRM**
METHOD, MOBILE DEVICE AND INFOTAINMENT SYSTEM FOR PROJECTING A USER INTERFACE ONTO A SCREEN
PROCÉDÉ, DISPOSITIF MOBILE ET SYSTÈME D'INFODIVERTISSEMENT POUR LA PROJECTION D'UNE INTERFACE UTILISATEUR SUR UN ÉCRAN

(30) Priorität: 15.03.2012 DE 102012005054
(43) Veröffentlichungstag der Anmeldung: 21.01.2015
(73) Patentinhaber: Volkswagen Aktiengesellschaft, 38440 Wolfsburg (DE)
(72) Erfinder: FERNAHL, Dennis, 13156 Berlin (DE); BECKMANN, Mark, 38124 Braunschweig (DE); SEUBERT, Christopher, 10247 Berlin (DE); REMUSS, Volker, 10707 Berlin (DE)
(86) Internationale Anmeldenummer: PCT/EP2013/055239
(87) Internationale Veröffentlichungsnummer: WO 2013/135815

(56) Entgegenhaltungen:
- US-A1- 2009 322 803
- US-A1- 2010 220 250
- US-A1- 2011 128 446

## Beschreibung

Die Erfindung betrifft ein Verfahren zum Übertragen einer für einen Bildschirm eines Mobilgerätes vorgesehenen Benutzeroberfläche eines in dem Mobilgerät ablaufenden Anwendungsprogrammes auf einen Bildschirm eines in einem Fahrzeug angeordneten Infotainmentsystems.

Die Erfindung betrifft ferner ein Mobilgerät mit einem Bildschirm, einer Schnittstelleneinheit und einem eine Bedienoberfläche auf dem Bildschirm darstellenden Anwendungsprogramm, wobei das Mobilgerät ausgebildet ist, mit einem in einem Fahrzeug eingebauten und einen Bildschirm aufweisenden Infotainmentsystem derart zusammenzuwirken, dass über die Schnittstelleneinheit eine Datenschnittstelle zwischen dem Mobilgerät und dem Infotainmentsystem gebildet wird.

Die Erfindung betrifft zudem ein Infotainmentsystem mit einem Bildschirm und einer Schnittstelleneinheit, wobei das Infotainmentsystem ausgebildet ist, mit einem einen Bildschirm aufweisenden Mobilgerät, auf dem ein eine Benutzeroberfläche auf dem Bildschirm des Mobilgeräts darstellendes Anwendungsprogramm abläuft, derart zusammenzuwirken, dass über die Schnittstelleneinheit eine Datenschnittstelle zwischen dem Mobilgerät und dem Infotainmentsystem gebildet wird.

Es ist bekannt, ein Anwendungsprogramm (auch Applikation genannt) eines Mobilgerätes in ein Infotainmentsystem eines Fahrzeugs zu integrieren. Der Bildschirminhalt des Mobilgerätes wird hierzu über eine Datenschnittstelle auf den im Fahrzeug eingebauten Bildschirm des Infotainmentsystems übertragen. Für die Übertragung eignet sich beispielsweise die Technologie MirrorLink ™ des Car Connectivity Consortium, Beaverton, USA.

Das Erscheinungsbild einer Benutzeroberfläche eines Anwendungsprogrammes variiert je nach den optischen Eigenschaften des gewählten Bildschirmes. Zu diesen Eigenschaften zählen zum Beispiel die Auflösung des Bildschirmes und seine Pixeldichte. Die Auflösung kann ausgedrückt werden durch die Anzahl Pixel in der Horizontalen (horizontale Auflösung) und in der Vertikalen (vertikale Auflösung). Unter einem Pixel wird dabei ein zur Darstellung eines Farbwertes benötigtes Flächenelement des Bildschirmes verstanden. Ein Pixel kann aus mehreren einfarbigen Bildpunkten zusammengesetzt sein, zum Beispiel aus je einem roten, grünen und blauen Bildpunkt, um beliebige Farbwerte darstellen zu können. Die Pixeldichte kann ausgedrückt werden durch die Anzahl Pixel pro Inch in der Horizontalen (horizontale Pixeldichte) und Vertikalen (vertikale Pixeldichte). Die Bildschirmgröße kann ausgedrückt werden durch die (sichtbare) horizontale Länge und die (sichtbare) vertikalen Länge des Bildschirmes.

Die unterschiedlichen Erscheinungsbilder der Benutzeroberfläche des Anwendungsprogrammes bereiten dem Entwickler des Anwendungsprogrammes Schwierigkeiten, wenn das Anwendungsprogramm für verschiedene Bildschirme geeignet sein soll. Der Entwickler muss die unterschiedlichen optischen Eigenschaften der Bildschirme berücksichtigen, um beispielsweise unerwünschte Verzerrungen zu vermeiden. Um den Entwickler von den konkreten optischen Eigenschaften der verschiedenen Bildschirmen zu befreien, ist es bekannt, ihn mit einem virtuellen Pixel arbeiten zu lassen, dem sogenannten dichteunabhängigen Pixel (engl.: density-independent pixel). Der Entwickler programmiert die Benutzeroberfläche des Anwendungsprogrammes in Einheiten dieser virtuellen Pixel und überlässt es den Bildschirmen, die Benutzeroberfläche richtig darzustellen.

Die Einführung der dichteunabhängigen Pixel gewährleistet jedoch noch nicht, dass der Bildschirminhalt eines Mobilgerätes in einer für den Fahrer eines Fahrzeuges geeigneten Art und Weise auf dem Bildschirm des Infotainmentsystems dargestellt wird.

Aus der US 2011/0128446 A1 ist ein Verfahren bekannt, bei dem eine Gerätedatenbank für unterschiedliche Gerätetypen von Fahrzeugen in einem tragbaren Gerät abgespeichert ist. Dabei sind Informationen wie beispielsweise die Bildschirmauflösung der verschiedenen Geräte in dieser Gerätedatenbank.

Aus der US 2010/220250 ist ein Verfahren bekannt, bei dem die Reproduktion der Anzeige eines Mobilgerätes auf einem Fahrzeugdisplay in Abhängigkeiten von Attributen des Fahrzeugdisplays erfolgt und bei dem Informationen über die Größe des Displays an das Mobilgerät übertragen werden kann. Der Erfindung liegt die Aufgabe zugrunde, ein Verfahren der eingangs erwähnten Art dahingehend zu verbessern, eine für einen Fahrer eines Fahrzeugs geeignete Darstellung einer Benutzeroberfläche eines in dem Mobilgerät ablaufenden Anwendungsprogrammes auf einem Bildschirm eines in dem Fahrzeug angeordneten Infotainmentsystems sicherzustellen. Der Erfindung liegt ferner die Aufgabe zugrunde, ein Mobilgerät und ein Infotainmentsystem bereitzustellen, mit denen das erfindungsgemäße Verfahren durchgeführt werden können.

Die Aufgabe wird erfindungsgemäß mit einem Verfahren der eingangs erwähnten Art dadurch gelöst, dass die Bildschirmgröße des Infotainmentsystems in der Einheit einer Vergleichsgröße in dem Infotainmentsystem ermittelt, wobei die Bildschirmgröße durch eine horizontale Länge und eine vertikale Länge des Bildschirmes ausgedrückt wird, die Bildschirmgröße des Infotainmentsystems über eine Datenschnittstelle an das Mobilgerät übertragen, die Benutzeroberflächengröße des in dem Mobilgerät ablaufenden Anwendungsprogrammes in der Einheit der Vergleichsgröße in dem Mobilgerät ermittelt, die Bildschirmgröße des Infotainmentsystems mit der Benutzeroberflächengröße des in dem Mobilgerät ablaufenden Anwendungsprogrammes verglichen wird und in Abhängigkeit des Vergleichs in dem Mobilgerät entschieden wird, ob und gegebenenfalls welche die Benutzeroberfläche betreffenden Bilddaten von dem Mobilgerät über die Datenschnittstelle an das Infotainmentsystem übertragen werden.

Kern der Erfindung ist es, dass sowohl auf dem Mobilgerät als auch in dem Infotainmentsystem einheitlich die Vergleichsgröße verwendet wird, um die Größe der Benutzeroberfläche (Benutzeroberflächengröße) beziehungsweise des Bildschirms (Bildschirmgröße) des Infotainmentsystems auszudrücken und für den Vergleich zu verwenden. So kann unabhängig von den im Einzelfall verwendeten Mobilgeräten und Infotainmentsystemen auf einfache Art und Weise sichergestellt werden, dass die Projektion der Anzeige des Mobilgerätes auf dem Bildschirm des Infotainmentsystems des Fahrzeugs eine ausreichende Größe haben wird, um von dem Fahrer sicher abgelesen und bedient zu werden. Zudem wird der Programmierer des Anwendungsprogrammes entlastet, da er sich nicht darum zu kümmern braucht, auf welchen Geräten sein Anwendungsprogramm laufen wird. Er gibt nur noch eine Größe in der Einheit der Vergleichsgröße vor, die der Bildschirm des zu verwendenden Gerätes haben sollte. Ein weiterer Vorteil des erfindungsgemäßen Verfahrens besteht darin, dass das Anwendungsprogramm mit einem einfachen Testaufbau dahingehend getestet werden kann, ob es auf das Unterschreiten der erforderlichen Bildschirmgröße richtig reagiert.

Die Benutzeroberfläche vollständig repräsentierende Bilddaten werden vorzugsweise von dem Mobilgerät über die Datenschnittstelle an das Infotainmentsystem übertragen, wenn der Vergleich ergibt, dass die Bildschirmgröße des Infotainmentsystems nicht kleiner ist als die Benutzeroberflächengröße des in dem Mobilgerät ablaufenden Anwendungsprogrammes. So kann die Benutzeroberfläche ohne inhaltliche Einschränkungen auf dem Bildschirm des Infotainmentsystems dargestellt werden und steht dem Fahrer zur Verfügung. Erfindungsgemäß werden die Benutzeroberfläche modifizierende Bilddaten von dem Mobilgerät über die Datenschnittstelle an das Infotainmentsystem übertragen, wenn der Vergleich ergibt, dass die Bildschirmgröße des Infotainmentsystems kleiner ist als die Benutzeroberflächengröße des in dem Mobilgerät ablaufenden Anwendungsprogrammes und das Anwendungsprogramm für die Bildschirmgröße des Infotainmentsystems eine modifizierte Benutzeroberfläche bereithält. Durch das Bereithalten modifizierender Bilddaten lässt sich vermeiden, dass die Benutzeroberfläche entweder gar nicht oder in ungenügender Qualität auf dem Bildschirm des Infotainmentsystems dargestellt wird. Erfindungsgemäß berücksichtigt der Programmierer des Anwendungsprogrammes bereits bei der Programmierung verschiedene Layout-Klassen, indem er für jede Layout-Klasse eine geeignete Benutzeroberfläche bereithält. Eine Layout-Klasse repräsentiert dabei Bildschirme, deren optischen Merkmale in bestimmte Intervalle fallen. Es wird also nicht eine Vielzahl von verschiedenen Bildschirmen betrachtet beziehungsweise berücksichtigt, sondern nur eine grobe Einteilung vorgenommen. So kann eine erste Layout-Klasse beispielsweise für Smartphones, eine zweite Layout-Klasse für Tablet-PC und eine dritte Layout-Klasse für Infotainmentsysteme vorgesehen sein, so dass der Programmierer drei verschiedene Darstellungen für eine Benutzeroberfläche des Anwendungsprogrammes vorhält. Die Zuordnung eines Bildschirmes zu einer Layout-Klasse erfolgt zweckmäßigerweise über die Größe des Bildschirmes in der Einheit der Vergleichsgröße.

In einer vorteilhaften Ausführungsform werden keine die Benutzeroberfläche betreffenden Bilddaten über die Datenschnittstelle an das Infotainmentsystem übertragen, wenn der Vergleich ergibt, dass die Bildschirmgröße des Infotainmentsystems kleiner ist als die Benutzeroberflächengröße des in dem Mobilgerät ablaufenden Anwendungsprogrammes und das Anwendungsprogramm für die Bildschirmgröße des Infotainmentsystems keine modifizierte Benutzeroberfläche bereithält. So wird vermieden, dass der Fahrer durch verzerrte oder schwer ablesbare Bildschirminhalte vom Verkehr abgelenkt wird.

Die Aufgabe wird zudem erfindungsgemäß mit einem Mobilgerät der eingangs erwähnten Art dadurch gelöst, dass das Mobilgerät ausgebildet ist, über die Datenschnittstelle von dem Infotainmentsystem die Bildschirmgröße des Infotainmentsystems in der Einheit einer Vergleichsgröße zu empfangen, wobei die Bildschirmgröße durch eine horizontale Länge und eine vertikale Länge des Bildschirmes ausgedrückt wird, die Benutzeroberflächengröße des in dem Mobilgerät ablaufenden Anwendungsprogrammes in der Einheit der Vergleichsgröße in dem Mobilgerät zu ermitteln, die Bildschirmgröße des Infotainmentsystems mit der Benutzeroberflächengröße des in dem Mobilgerät ablaufenden Anwendungsprogrammes zu vergleichen und in Abhängigkeit des Vergleichs zu entscheiden, ob und gegebenenfalls welche die Benutzeroberfläche betreffende Bilddaten von dem Mobilgerät über die Datenschnittstelle an das Infotainmentsystem übertragen werden.

Die Vorteile des erfindungsgemäßen Mobilgerätes ergeben sich aus den vorgenannten Vorteilen zum erfindungsgemäßen Verfahren, da das Mobilgerät ausgebildet ist, mit einem geeigneten Infotainmentsystem so zusammenzuwirken, dass mit ihnen das erfindungsgemäße Verfahren durchgeführt werden kann.

Um die Benutzeroberfläche ohne inhaltliche Einschränkungen auf dem Bildschirm des Infotainmentsystems darzustellen und dem Fahrer zur Verfügung zu stellen, ist das Mobilgerät zweckmäßigerweise ausgebildet, die Benutzeroberfläche vollständig repräsentierende Bilddaten von dem Mobilgerät über die Datenschnittstelle an das Infotainmentsystem zu übertragen, wenn der Vergleich ergibt, dass die Bildschirmgröße des Infotainmentsystems nicht kleiner ist als die Benutzeroberflächengröße des in dem Mobilgerät ablaufenden Anwendungsprogrammes. Gemäß der Erfindung
ist das Mobilgerät ausgebildet, die Benutzeroberfläche modifizierende Bilddaten von dem Mobilgerät über die Datenschnittstelle an das Infotainmentsystem zu übertragen, wenn der Vergleich ergibt, dass die Bildschirmgröße des Infotainmentsystems kleiner ist als die Benutzeroberflächengröße des in dem Mobilgerät ablaufenden Anwendungsprogrammes und das Anwendungsprogramm für die Bildschirmgröße des Infotainmentsystems eine modifizierte Benutzeroberfläche bereithält. Durch das Bereithalten modifizierender Bilddaten lässt sich vermeiden, dass die Benutzeroberfläche entweder gar nicht oder in ungenügender Qualität auf dem Bildschirm des Infotainmentsystems dargestellt wird.

Um zu vermieden, dass der Fahrer durch verzerrte oder schwer ablesbare Bildschirminhalte vom Verkehr abgelenkt wird, ist das Mobilgerät in einer vorteilhaften Ausführungsform ausgebildet, keine die Benutzeroberfläche betreffenden Bilddaten über die Datenschnittstelle an das Infotainmentsystem zu übertragen, wenn der Vergleich ergibt, dass die Bildschirmgröße des Infotainmentsystems kleiner ist als die Benutzeroberflächengröße des in dem Mobilgerät ablaufenden Anwendungsprogrammes und das Anwendungsprogramm für die Bildschirmgröße des Infotainmentsystems keine modifizierte Benutzeroberfläche bereithält.

Die Aufgabe wird ferner erfindungsgemäß mit entsprechend ausgebildeten Infotainmentsystem der eingangs erwähnten Art gelöst. Die Vorteile des erfindungsgemäßen Infotainmentsystems ergeben sich aus den vorgenannten Vorteilen zum erfindungsgemäßen Verfahren, da das Infotainmentsystem ausgebildet ist, mit dem erfindungsgemäßen Mobilgerät derart zusammenzuwirken, dass mit ihnen das erfindungsgemäße Verfahren durchgeführt werden kann.

Die Erfindung soll im Folgenden anhand eines in der Zeichnung dargestellten Ausführungsbeispiels näher erläutert werden. Es zeigen:
- Fig.1: eine schematische Anordnung eines erfindungsgemäßen Mobilgerätes und eines erfindungsgemäßen Infotainmentsystems,
- Fig. 2: ein Flussdiagramm des erfindungsgemäßen Verfahrens und
- Fig. 3: eine schematische Anordnung der Bildschirme des Mobilgerätes und des Infotainmentsystem aus Figur 1.

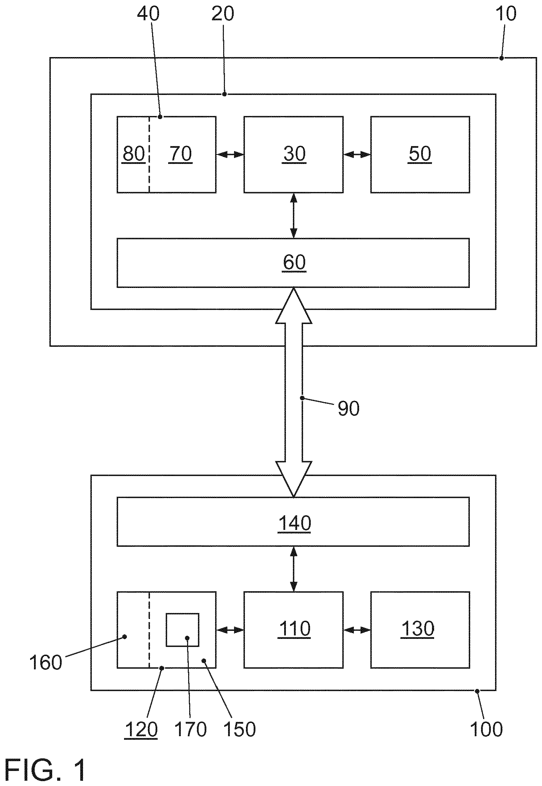

Figur 1 zeigt ein in der Mittelkonsole eines Fahrzeugs 10 eingebautes Infotainmentsystem 20. Das Infotainmentsystem 20 ist ein Verbund mehrerer Einrichtungen, das dem Fahrer verschiedene Informationen und/oder Funktionen bereitstellt. Zu solchen Einrichtungen zählen beispielsweise: Radio, CD (Compact Disc), DVD (Digital Versatile Disc), Telefon, Navigationsgerät und Verkehrstelematikgerät.

Das Infotainmentsystem 20 weist eine Steuereinheit 30, eine Speichereinheit 40, einen Bildschirm 50 und eine Schnittstelleneinheit 60 auf.

Die Speichereinheit 40 setzt sich im vorliegenden Ausführungsbeispiel aus einem in dem Infotainmentsystem 20 fest integrierten internen Speicher 70 und einem optionalen externen Speicher 80 zusammen. Bei dem optionalen externen Speicher 80 kann es sich beispielsweise um eine in einen geeigneten Aufnahmeschacht einzuführende SD-Karte (SD: Secure Digital) oder einen USB-Stick (USB: Universal Serial Bus) handeln.

In der Speichereinheit 40 ist die Größe des Bildschirmes 50 in der Einheit einer Vergleichsgröße gespeichert. Vorliegend ist die Vergleichsgröße definiert als: Eins durch hundert einer willkürlichen Längeneinheit (LE) in der Horizontalen; Eins durch hundert der willkürlichen Längeneinheit in der Vertikalen. Das heißt, es kommen sowohl in der Horizontalen als auch in der Vertikalen einhundert virtuelle Pixel auf eine Längeneinheit. Als willkürliche Längeneinheit kann beispielsweise ein Zentimeter gewählt werden.

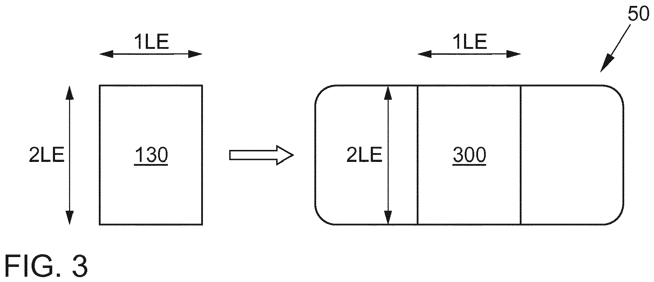

Der Bildschirm 50 (siehe auch Figur 3) hat eine Auflösung von achthundert realen Pixeln in der Horizontalen und vierhundert realen Pixeln in der Vertikalen. Die horizontale Ausdehnung (Breite) beträgt zwei Längeneinheiten, die vertikale Ausdehnung (Höhe) eine Längeneinheit. Damit ergibt sich eine Pixeldichte von vierhundert Pixeln pro Längeneinheit sowohl in der Horizontalen als auch in der Vertikalen. Für die Größe des Bildschirmes 50 in der Einheit der Vergleichsgröße kommt es nur auf die Breite und Höhe des Bildschirmes 50 an. Die Größe in der Einheit der Vergleichsgröße ergibt sich damit zu zweihundert Einheiten in der Horizontalen und einhundert in der Vertikalen. Oder anders geschrieben zu: (zweihundert x einhundert).

Über die Schnittstelleneinheit 60 kann eine Datenschnittstelle 90 zum Austausch von Daten zu externen Geräten aufgebaut werden, zum Beispiel zu einem Mobilgerät 100. Die Datenschnittstelle 90 ist vorliegend so ausgebildet, dass sie den Standard MirrorLink ™ unterstützt.

Die Steuereinheit 30 kann Daten bidirektional mit der Speichereinheit 40 austauschen. Aus der Speichereinheit 40 liest die Steuereinheit 30 beispielsweise die Größe des Bildschirmes 50 in der Einheit der Vergleichsgröße ein.

Die Steuereinheit 30 kann Daten bidirektional mit dem Bildschirm 50 austauschen. Beispielsweise sendet die Steuereinheit 30 Bilddaten an den Bildschirm 50, der daraufhin einen den Bilddaten entsprechenden Bildschirminhalt anzeigt. Der Bildschirm 50 ist als Touchscreen ausgeführt, so dass der Benutzer durch Berühren der Bildschirmoberfläche Steuerbefehle in das Infotainmentsystem 20 eingeben kann. Diese Steuerbefehle werden dann an die Steuereinheit 30 übertragen.

Die Steuereinheit 30 kann Daten bidirektional mit der Schnittstelleneinheit 60 austauschen. Beispielsweise sendet die Steuereinheit 30 die Größe des Bildschirmes 50 in der Einheit der Vergleichsgröße über die Schnittstelleneinheit 60 und die Datenschnittstelle 90 an das Mobilgerät 100.

Das Mobilgerät 100 weist eine Steuereinheit 110, eine Speichereinheit 120, einen Bildschirm 130 und eine Schnittstelleneinheit 140 auf.

Die Speichereinheit 120 setzt sich im vorliegenden Ausführungsbeispiel aus einem in dem Mobilgerät 100 fest integrierten internen Speicher 150 und einem optionalen externen Speicher 160 zusammen.

In der Speichereinheit 120, vorliegend in dem internen Speicher 150, ist der Programmcode eines Anwendungsprogrammes 170 gespeichert.

Der Bildschirm 130 (siehe auch Figur 3) hat eine Auflösung von eintausend realen Pixeln in der Horizontalen und zweitausend realen Pixeln in der Vertikalen. Die horizontale Ausdehnung (Breite) beträgt eine Längeneinheit, die vertikale Ausdehnung (Höhe) ebenfalls eine Längeneinheit. Damit ergibt sich eine Pixeldichte von eintausend Pixeln pro Längeneinheit in der Horizontalen und zweitausend Pixeln pro Längeneinheit in der Vertikalen. Die realen Pixel liegen also viel dichter beieinander als bei dem Bildschirm 50 des Infotainmentsystems 20. Für die Größe des Bildschirmes 130 in der Einheit der Vergleichsgröße kommt es auch hier nur auf die Breite und Höhe des Bildschirmes 130 an. Die Größe in der Einheit der Vergleichsgröße ergibt sich damit zu einhundert Einheiten in der Horizontalen und einhundert Einheiten in der Vertikalen. Oder anders geschrieben zu: (einhundert x einhundert).

Über die Schnittstelleneinheit 140 wird die Datenschnittstelle 90 zum Austausch von Daten zu dem Infotainmentsystem 20 aufgebaut. Selbstverständlich können über die Schnittstelleneinheit 140 auch Datenschnittstellen zu anderen Geräten aufgebaut werden. Vorliegend interessiert jedoch nur die Datenschnittstelle 90.

Die Steuereinheit 110 kann Daten bidirektional mit der Speichereinheit 120 austauschen. Aus der Speichereinheit 120 liest die Steuereinheit 110 beispielsweise das Anwendungsprogramm 170 ein, um es auszuführen.

Die Steuereinheit 110 kann Daten bidirektional mit dem Bildschirm 130 austauschen. Beispielsweise sendet die Steuereinheit 110 Bilddaten an den Bildschirm 130, der daraufhin einen den Bilddaten entsprechenden Bildschirminhalt anzeigt, zum Beispiel eine Benutzeroberfläche des Anwendungsprogrammes 170. Der Bildschirm 130 ist auch als Touchscreen ausgeführt, so dass der Benutzer durch Berühren der Bildschirmoberfläche Steuerbefehle an das Mobilgerät 100 übergeben kann. Diese Steuerbefehle werden dann an die Steuereinheit 110 übertragen.

Die Steuereinheit 110 kann Daten bidirektional mit der Schnittstelleneinheit 140 austauschen. Beispielsweise empfängt die Steuereinheit 110 die Größe des Bildschirmes 50 des Infotainmentsystems 20 in der Einheit der Vergleichsgröße Datenschnittstelle 90 und die Schnittstelleneinheit 140 von dem Infotainmentsystem 20. Die Steuereinheit 110 kann zudem Daten, beispielsweise die Benutzeroberfläche betreffende Bilddaten, über die Schnittstelleneinheit 140 und die Datenschnittstelle 90 an das Infotainmentsystem 20 senden.

In der Steuereinheit 110 des Mobilgerätes 100 wird ein Vergleich der Größe des Bildschirmes 130 (oder der Benutzeroberfläche) mit der Größe des Bildschirmes 50 des Infotainmentsystems 20 durchgeführt und entschieden, ob und gegebenenfalls welche Bilddaten an das Infotainmentsystem 20 gesendet werden.

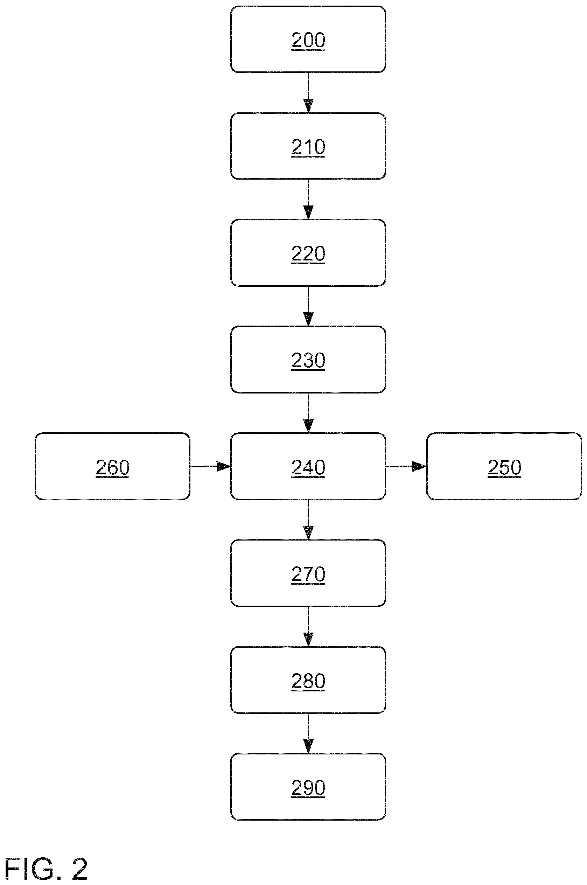

Anhand der Figur 2 soll das erfindungsgemäße Verfahren näher erläutert werden.

In einem Schritt 200 ermittelt die Steuereinheit 30 des Infotainmentsystems 20 die Größe des Bildschirmes 50 des Infotainmentsystems 20 in der Einheit der Vergleichsgröße.

In einem Schritt 210 sendet die Steuereinheit 30 die Größe des Bildschirmes 50 des Infotainmentsystems 20 in der Einheit der Vergleichsgröße über die Schnittstelleneinheit 60 und die Datenschnittstelle 90 an das Mobilgerät 100.

In einem Schritt 220 ermittelt die Steuereinheit 110 des Mobilgerätes 100 die Benutzeroberflächengröße des in dem Mobilgerät 100 ablaufenden Anwendungsprogrammes 170 in der Einheit der Vergleichsgröße. Dies erfolgt zweckmäßigerweise derart, dass das Anwendungsprogramm 170 die Benutzeroberflächengröße in der Einheit der Vergleichsgröße bereithält und an die Steuereinheit 110 übergibt, beispielsweise nachdem die Steuereinheit 110 ein Anforderungssignal an das Anwendungsprogramm 170 gesendet hat.

In einem Schritt 230 vergleicht die Steuereinheit 110 die Größe des Bildschirmes 50 des Infotainmentsystems 20 in der Einheit der Vergleichsgröße mit der Benutzeroberflächengröße des Anwendungsprogrammes 170 in der Einheit der Vergleichsgröße. Das Vergleichsergebnis wird daraufhin in einem Schritt 240 ausgewertet.

In dem Schritt 240 entscheidet die Steuereinheit 110 darüber, ob und gegebenenfalls welche die Benutzeroberfläche betreffende Bilddaten von dem Mobilgerät 100 über die Datenschnittstelle 90 an das Infotainmentsystem 20 übertragen werden.

Ergibt der Vergleich, dass die Bildschirmgröße des Infotainmentsystems 20 kleiner ist als die Benutzeroberflächengröße des in dem Mobilgerät 100 ablaufenden Anwendungsprogrammes 170 und das Anwendungsprogramm für die Bildschirmgröße des Infotainmentsystems 20 keine modifizierte Benutzeroberfläche bereithält, so wird das Verfahren in einem Schritt 250 beendet. Zweckmäßigerweise sendet die Steuereinheit 110 eine Mitteilung an die Steuereinheit 30 des Infotainmentsystems 20, dass keine Bilddaten für dieses Anwendungsprogramm 170 übertragen werden. Dann kann die Steuereinheit 30 den Bildschirm 50 so ansteuern, dass dem Benutzer, insbesondere dem Fahrer, mitgeteilt wird, dass das Anwendungsprogramm 170 in dem Infotainmentsystem 20 nicht zur Verfügung steht beziehungsweise die Benutzeroberfläche des Anwendungsprogramm 170 auf dem Bildschirm 50 des Infotainmentsystems 20 nicht zur Verfügung steht.

Ergibt der Vergleich, dass die Bildschirmgröße des Infotainmentsystems 20 kleiner ist als die Benutzeroberflächengröße des in dem Mobilgerät 100 ablaufenden Anwendungsprogrammes 170, und hält das Anwendungsprogramm 170 für die Bildschirmgröße des Infotainmentsystems 20 eine modifizierte Benutzeroberfläche bereit, so überträgt die Steuereinheit 110 die Benutzeroberfläche modifizierende Bilddaten, die die Steuereinheit 110 in einem Schritt 260 von dem Anwendungsprogramm 170 erhält, von dem Mobilgerät 100 über die Datenschnittstelle 90 an das Infotainmentsystem 20. Die Bilddaten der modifizierten Benutzeroberfläche sind in dem Anwendungsprogramm 170 in einer Layout-Klasse gespeichert. Das Anwendungsprogramm 170 kann auch mehrere Layout-Klassen bereithalten.

In einem Schritt 270 werden die Bilddaten von dem Mobilgerät 100 über die Datenschnittstelle 90 an das Infotainmentsystem 20 übertragen.

In einem Schritt 280 werden die Bilddaten von der Steuereinheit 30 an den Bildschirm 50 gesendet, wobei die Bilddaten in der Steuereinheit 30 gegebenenfalls noch in geeignete Steuersignale umgewandelt werden.

In einem Schritt 290 wird aus den Bilddaten beziehungsweise den Steuersignalen ein Bildschirminhalt erzeugt, der auf dem Bildschirm 50 angezeigt wird.

Figur 3 zeigt den Bildschirm 130 des Mobilgerätes und den Bildschirm 50 des Infotainmentsystems 20.

Der Bildschirm 130 des Mobilgerätes entspricht im vorliegenden Ausführungsbeispiel der Benutzeroberfläche des Anwendungsprogrammes 170. Die Benutzeroberfläche kann aber auch größer als der Bildschirm 130 sein ober kleiner.

Der Vergleich in der Einheit der Vergleichsgröße ergibt hier (siehe Beschreibung zu Figur 1), dass die Benutzeroberflächengröße (einhundert x einhundert) nicht größer ist als die Bildschirmgröße (zweihundert x einhundert) des Bildschirmes 50, da die Bedingung "nicht größer als" sowohl für die Breiten (einhundert < zweihundert) als auch für die Höhen (einhundert = einhundert) erfüllt ist. Damit kann die Benutzeroberfläche des Anwendungsprogrammes vollständig auf dem Bildschirm 50 des Infotainmentsystems 20 als Bild 300 angezeigt werden, obwohl die Auflösung und die Pixeldichte des Bildschirmes 130 des Mobilgerätes 100 größer sind als die Auflösung und die Pixeldichte des Bildschirmes 50 des Infotainmentsystems 20.

### Bezugszeichenliste

- 10: Fahrzeug
- 20: Infotainmentsystem
- 30: Steuereinheit
- 40: Speichereinheit
- 50: Bildschirm
- 60: Schnittstelleneinheit
- 70: Interner Speicher
- 80: Externer Speicher
- 90: Datenschnittstelle
- 100: Mobilgerät
- 110: Steuereinheit
- 120: Speichereinheit
- 130: Bildschirm
- 140: Schnittstelleneinheit
- 150: Interner Speicher
- 160: Externer Speicher
- 170: Anwendungsprogramm
- 200-290: Schritte
- 300: Bild

## Patentansprüche

1. Verfahren zum Übertragen einer für einen Bildschirm (130) eines Mobilgerätes (100) vorgesehenen Benutzeroberfläche eines in dem Mobilgerät (100) ablaufenden Anwendungsprogrammes (170) auf einen Bildschirm (50) eines in einem Fahrzeug (10) angeordneten Infotainmentsystems (20), **dadurch gekennzeichnet, dass** die Bildschirmgröße des Infotainmentsystems (20) in der Einheit einer Vergleichsgröße in dem Infotainmentsystem (20) ermittelt wird, wobei die Bildschirmgröße durch eine horizontale Länge und eine vertikale Länge des Bildschirmes ausgedrückt wird, die Bildschirmgröße des Infotainmentsystems (20) über eine Datenschnittstelle (90) an das Mobilgerät (100) übertragen wird, die Benutzeroberflächengröße des in dem Mobilgerät (100) ablaufenden Anwendungsprogrammes (170) in der Einheit der Vergleichsgröße in dem Mobilgerät (100) ermittelt wird, die Bildschirmgröße des Infotainmentsystems (20) mit der Benutzeroberflächengröße des in dem Mobilgerät (100) ablaufenden Anwendungsprogrammes (170) verglichen wird und in Abhängigkeit des Vergleichs in dem Mobilgerät (100) entschieden wird, ob und gegebenenfalls welche die Benutzeroberfläche betreffende Bilddaten von dem Mobilgerät (100) über die Datenschnittstelle (90) an das Infotainmentsystem (20) übertragen werden, wobei die Benutzeroberfläche modifizierende Bilddaten von dem Mobilgerät (100) über die Datenschnittstelle (90) an das Infotainmentsystem (20) übertragen werden, wenn der Vergleich ergibt, dass die Bildschirmgröße des Infotainmentsystems (20) kleiner ist als die Benutzeroberflächengröße des in dem Mobilgerät ablaufenden Anwendungsprogrammes (170) und das Anwendungsprogramm (170) für die Bildschirmgröße des Infotainmentsystems (20) eine modifizierte Benutzeroberfläche bereithält, wobei die Bildschirme anhand ihrer Größe in der Einheit der Vergleichsgröße Layout-Klassen zugeordnet werden, wobei die Layout-Klassen Bildschirme repräsentieren, deren Größen in bestimmte Intervalle fallen, und für jede Layout-Klasse eine geeignete Benutzeroberfläche bereitgehalten wird.

2. Verfahren nach Anspruch 1, **dadurch gekennzeichnet, dass** die Benutzeroberfläche vollständig repräsentierende Bilddaten von dem Mobilgerät (100) über die Datenschnittstelle (90) an das Infotainmentsystem (20) übertragen werden, wenn der Vergleich ergibt, dass die Bildschirmgröße des Infotainmentsystems (20) nicht kleiner ist als die Benutzeroberflächengröße des in dem Mobilgerät (100) ablaufenden Anwendungsprogrammes (170).

3. Verfahren nach einem der vorstehenden Ansprüche, **dadurch gekennzeichnet, dass** keine die Benutzeroberfläche betreffenden Bilddaten über die Datenschnittstelle (90) an das Infotainmentsystem (20) übertragen werden, wenn der Vergleich ergibt, dass die Bildschirmgröße des Infotainmentsystems (20) kleiner ist als die Benutzeroberflächengröße des in dem Mobilgerät (100) ablaufenden Anwendungsprogrammes (170) und das Anwendungsprogramm (170) für die Bildschirmgröße des Infotainmentsystems (20) keine modifizierte Benutzeroberfläche bereithält.

4. Mobilgerät mit einem Bildschirm (130), einer Schnittstelleneinheit (140) und einem eine Bedienoberfläche auf dem Bildschirm (130) darstellenden Anwendungsprogramm (170), wobei das Mobilgerät (100) ausgebildet ist, mit einem in einem Fahrzeug (10) eingebauten und einen Bildschirm (50) aufweisenden Infotainmentsystem (20) derart zusammenzuwirken, dass über die Schnittstelleneinheit (140) eine Datenschnittstelle (90) zwischen dem Mobilgerät (100) und dem Infotainmentsystem (20) gebildet wird, **dadurch gekennzeichnet, dass** das Mobilgerät (100) ausgebildet ist, über die Datenschnittstelle (90) von dem Infotainmentsystem (20) die Bildschirmgröße des Infotainmentsystems (20) in der Einheit einer Vergleichsgröße zu empfangen, wobei die Bildschirmgröße durch eine horizontale Länge und eine vertikale Länge des Bildschirmes ausgedrückt wird, die Benutzeroberflächengröße des in dem Mobilgerät (100) ablaufenden Anwendungsprogrammes (170) in der Einheit der Vergleichsgröße in dem Mobilgerät (100) zu ermitteln, die Bildschirmgröße des Infotainmentsystems (20) mit der Benutzeroberflächengröße des in dem Mobilgerät (100) ablaufenden Anwendungsprogrammes (170) zu vergleichen und in Abhängigkeit des Vergleichs zu entscheiden, ob und gegebenenfalls welche die Benutzeroberfläche betreffende Bilddaten von dem Mobilgerät (100) über die Datenschnittstelle (90) an das Infotainmentsystem (20) übertragen werden, wobei das Mobilgerät (100) ausgebildet ist, die Benutzeroberfläche modifizierende Bilddaten von dem Mobilgerät (100) über die Datenschnittstelle (90) an das Infotainmentsystem (20) zu übertragen, wenn der Vergleich ergibt, dass die Bildschirmgröße des Infotainmentsystems (20) kleiner ist als die Benutzeroberflächengröße des in dem Mobilgerät (100) ablaufenden Anwendungsprogrammes (170) und das Anwendungsprogramm (170) für die Bildschirmgröße des Infotainmentsystems (20) eine modifizierte Benutzeroberfläche bereithält, wobei die Bildschirme anhand ihrer Größe in der Einheit der Vergleichsgröße Layout-Klassen zugeordnet werden, wobei die Layout-Klassen Bildschirme repräsentieren, deren Größen in bestimmte Intervalle fallen, und für jede Layout-Klasse eine geeignete Benutzeroberfläche bereitgehalten wird.

5. Mobilgerät nach Anspruch 4, **dadurch gekennzeichnet, dass** das Mobilgerät (100) ausgebildet ist, die Benutzeroberfläche vollständig repräsentierende Bilddaten von dem Mobilgerät (100) über die Datenschnittstelle (90) an das Infotainmentsystem (20) zu übertragen, wenn der Vergleich ergibt, dass die Bildschirmgröße des Infotainmentsystems (20) nicht kleiner ist als die Benutzeroberflächengröße des in dem Mobilgerät (100) ablaufenden Anwendungsprogrammes (170).

6. Mobilgerät nach Anspruch 4 oder 5, **dadurch gekennzeichnet, dass** das Mobilgerät (100) ausgebildet ist, keine die Benutzeroberfläche betreffenden Bilddaten über die Datenschnittstelle (90) an das Infotainmentsystem (20) zu übertragen, wenn der Vergleich ergibt, dass die Bildschirmgröße des Infotainmentsystems (20) kleiner ist als die Benutzeroberflächengröße des in dem Mobilgerät (100) ablaufenden Anwendungsprogrammes (170) und das Anwendungsprogramm (170) für die Bildschirmgröße des Infotainmentsystems (20) keine modifizierte Benutzeroberfläche bereithält.

7. Infotainmentsystem zur Anordnung in einem Fahrzeug (10) mit einem Bildschirm (50) und einer Schnittstelleneinheit (60), wobei das Infotainmentsystem (20) ausgebildet ist, mit einem einen Bildschirm (130) aufweisenden Mobilgerät (100), auf dem ein eine Benutzeroberfläche auf dem Bildschirm (130) des Mobilgeräts (100) darstellendes Anwendungsprogramm (170) abläuft, derart zusammenzuwirken, dass über die Schnittstelleneinheit (60) eine Datenschnittstelle (90) zwischen dem Mobilgerät (100) und dem Infotainmentsystem (20) gebildet wird, **dadurch gekennzeichnet, dass** das Infotainmentsystem (20) ausgebildet ist, die Bildschirmgröße des Infotainmentsystems (20) in der Einheit einer Vergleichsgröße zu ermitteln, wobei die Bildschirmgröße durch eine horizontale Länge und eine vertikale Länge des Bildschirmes ausgedrückt wird, und über die Datenschnittstelle (90) an das Mobilgerät (100) zu übertragen sowie von dem Mobilgerät (100) bereitgestellte und die Benutzeroberfläche betreffende Bilddaten über die Datenschnittstelle (90) zu empfangen, wobei das Mobilgerät (100) ausgebildet ist, die Benutzeroberfläche modifizierende Bilddaten von dem Mobilgerät (100) über die Datenschnittstelle (90) an das Infotainmentsystem (20) zu übertragen, wenn der Vergleich ergibt, dass die Bildschirmgröße des Infotainmentsystems (20) kleiner ist als die Benutzeroberflächengröße des in dem Mobilgerät (100) ablaufenden Anwendungsprogrammes (170) und das Anwendungsprogramm (170) für die Bildschirmgröße des Infotainmentsystems (20) eine modifizierte Benutzeroberfläche bereithält, wobei die Bildschirme anhand ihrer Größe in der Einheit der Vergleichsgröße Layout-Klassen zugeordnet werden, wobei die Layout-Klassen Bildschirme repräsentieren, deren Größen in bestimmte Intervalle fallen, und für jede Layout-Klasse eine geeignete Benutzeroberfläche bereitgehalten wird.

## Claims

1. Method for transmitting a user interface, provided for a screen (130) of a mobile device (100), of an application program (170) running in the mobile device (100) to a screen (50) of an infotainment system (20) arranged in a vehicle (10), **characterized in that** the screen size of the infotainment system (20) is ascertained in the unit of a comparison variable in the infotainment system (20), wherein the screen size is expressed by a horizontal length and a vertical length of the screen, the screen size of the infotainment system (20) is transmitted to the mobile device (100) via a data interface (90), the user interface size of the application program (170) running in the mobile device (100) is ascertained in the unit of the comparison variable in the mobile device (100), the screen size of the infotainment system (20) is compared with the user interface size of the application program (170) running in the mobile device (100) and the comparison is taken as a basis for deciding in the mobile device (100) whether and if applicable which image data relating to the user interface are transmitted from the mobile device (100) to the infotainment system (20) via the data interface (90), wherein image data modifying the user interface are transmitted from the mobile device (100) to the infotainment system (20) via the data interface (90) if the comparison reveals that the screen size of the infotainment system (20) is smaller than the user interface size of the application program (170) running in the mobile device and the application program (170) keeps a modified user interface for the screen size of the infotainment system (20), wherein the screens are assigned to layout classes on the basis of their size in the unit of the comparison variable, the layout classes representing screens whose sizes come within particular intervals, and a suitable user interface is kept for each layout class.

2. Method according to Claim 1, **characterized in that** image data representing the user interface completely are transmitted from the mobile device (100) to the infotainment system (20) via the data interface (90) if the comparison reveals that the screen size of the infotainment system (20) is not smaller than the user interface size of the application program (170) running in the mobile device (100).

3. Method according to one of the preceding claims, **characterized in that** no image data relating to the user interface are transmitted to the infotainment system (20) via the data interface (90) if the comparison reveals that the screen size of the infotainment system (20) is smaller than the user interface size of the application program (170) running in the mobile device (100) and the application program (170) does not keep a modified user interface for the screen size of the infotainment system (20).

4. Mobile device having a screen (130), an interface unit (140) and an application program (170) depicting a user interface on the screen (130), wherein the mobile device (100) is configured to interact with an infotainment system (20) installed in a vehicle (10) and having a screen (50) such that the interface unit (140) is used to form a data interface (90) between the mobile device (100) and the infotainment system (20), **characterized in that** the mobile device (100) is configured to use the data interface (90) to receive from the infotainment system (20) the screen size of the infotainment system (20) in the unit of a comparison variable, wherein the screen size is expressed by a horizontal length and a vertical length of the screen, to ascertain the user interface size of the application program (170) running in the mobile device (100) in the unit of the comparison variable in the mobile device (100), to compare the screen size of the infotainment system (20) with the user interface size of the application program (170) running in the mobile device (100) and to take the comparison as a basis for deciding whether and if applicable which image data relating to the user interface are transmitted from the mobile device (100) to the infotainment system (20) via the data interface (90), wherein the mobile device (100) is configured to transmit image data modifying the user interface from the mobile device (100) to the infotainment system (20) via the data interface (90) if the comparison reveals that the screen size of the infotainment system (20) is smaller than the user interface size of the application program (170) running in the mobile device (100) and the application program (170) keeps a modified user interface for the screen size of the infotainment system (20), wherein the screens are assigned to layout classes on the basis of their size in the unit of the comparison variable, the layout classes representing screens whose sizes come within particular intervals, and a suitable user interface is kept for each layout class.

5. Mobile device according to Claim 4, **characterized in that** the mobile device (100) is configured to transmit image data representing the user interface completely from the mobile device (100) to the infotainment system (20) via the data interface (90) if the comparison reveals that the screen size of the infotainment system (20) is not smaller than the user interface size of the application program (170) running in the mobile device (100).

6. Mobile device according to Claim 4 or 5, **characterized in that** the mobile device (100) is configured not to transmit image data relating to the user interface to the infotainment system (20) via the data interface (90) if the comparison reveals that the screen size of the infotainment system (20) is smaller than the user interface size of the application program (170) running in the mobile device (100) and the application program (170) does not keep a modified user interface for the screen size of the infotainment system (20).

7. Infotainment system for arrangement in a vehicle (10) having a screen (50) and an interface unit (60), wherein the infotainment system (20) is configured to interact with a mobile device (100), having a screen (130) and on which an application program (170) depicting a user interface on the screen (130) of the mobile device (100) runs, such that the interface unit (60) is used to form a data interface (90) between the mobile device (100) and the infotainment system (20), **characterized in that** the infotainment system (20) is configured to ascertain the screen size of the infotainment system (20) in the unit of a comparison variable, wherein the screen size is expressed by a horizontal length and a vertical length of the screen, and to use the data interface (90) to transmit it to the mobile device (100) and to receive image data provided by the mobile device (100) and relating to the user interface via the data interface (90), wherein the mobile device (100) is configured to transmit image data modifying the user interface from the mobile device (100) to the infotainment system (20) via the data interface (90) if the comparison reveals that the screen size of the infotainment system (20) is smaller than the user interface size of the application program (170) running in the mobile device (100) and the application program (170) keeps a modified user interface for the screen size of the infotainment system (20), wherein the screens are assigned to layout classes on the basis of their size in the unit of the comparison variable, the layout classes representing screens whose sizes come within particular intervals, and a suitable user interface is kept for each layout class.

## Revendications

1. Procédé de transmission d'une interface utilisateur prévue pour un écran (130) d'un appareil mobile (100) d'un programme d'application (170) exécuté dans l'appareil mobile (100) sur un écran (50) d'un système d'infodivertissement (20) disposé dans un véhicule (10), **caractérisé en ce que** la taille d'écran du système d'infodivertissement (20) est déterminé dans l'unité d'une grandeur comparative dans le système d'infodivertissement (20),
la taille d'écran étant exprimée par une longueur horizontale et une longueur verticale de l'écran, la taille d'écran du système d'infodivertissement (20) étant transmise à l'appareil mobile (100) par le biais d'une interface de données (90),
l'interface utilisateur du programme d'application (170) exécuté dans l'appareil mobile (100) étant déterminée dans l'unité de la grandeur comparative dans l'appareil mobile (100),
la taille d'écran du système d'infodivertissement (20) étant comparée à la taille de l'interface utilisateur du programme d'application (170) exécuté dans l'appareil mobile (100) et une décision étant prise en fonction de la comparaison dans l'appareil mobile (100) pour déterminer si des données d'image concernant l'interface utilisateur, et le cas échéant lesquelles, sont transmises de l'appareil mobile (100) au système d'infodivertissement (20) par le biais de l'interface de données (90), les données d'image qui modifient l'interface utilisateur étant transmises de l'appareil mobile (100) au système d'infodivertissement (20) par le biais de l'interface de données (90) lorsqu'il résulte de la comparaison que la taille d'écran du système d'infodivertissement (20) est inférieure à l'interface utilisateur du programme d'application (170) exécuté dans l'appareil mobile (100) et le programme d'application (170) tient à disposition une interface utilisateur modifiée pour la taille d'écran du système d'infodivertissement (20), les tailles d'écran étant associées à des classes de mise en page à l'aide de leur grandeur dans l'unité de la grandeur comparative, les classes de mise en page représentant des écrans dont les tailles sont incluses dans des intervalles donnés et une interface utilisateur appropriée étant tenue à disposition pour chaque classe de mise en page.

2. Procédé selon la revendication 1, **caractérisé en ce que** les données d'image qui représentent entièrement l'interface utilisateur sont transmises de l'appareil mobile (100) au système d'infodivertissement (20) par le biais de l'interface de données (90) lorsqu'il résulte de la comparaison que la taille d'écran du système d'infodivertissement (20) n'est pas inférieure à la taille de l'interface utilisateur du programme d'application (170) exécuté dans l'appareil mobile (100).

3. Procédé selon l'une des revendications précédentes, **caractérisé en ce qu'**aucune donnée d'image concernant l'interface utilisateur n'est transmise au système d'infodivertissement (20) par le biais de l'interface de données (90) lorsqu'il résulte de la comparaison que la taille d'écran du système d'infodivertissement (20) est inférieure à la taille de l'interface utilisateur du programme d'application (170) exécuté dans l'appareil mobile (100) et que le programme d'application (170) ne tient à disposition aucune interface utilisateur modifiée pour la taille d'écran du système d'infodivertissement (20).

4. Appareil mobile comprenant un écran (130), une unité d'interface (140) et un programme d'application (170) qui représente une interface utilisateur sur l'écran (130), l'appareil mobile (100) étant configuré pour coopérer avec un système d'infodivertissement (20) disposé dans un véhicule (10) et possédant un écran (50) de telle sorte qu'une interface de données (90) entre l'appareil mobile (100) et le système d'infodivertissement (20) est formée par le biais de l'unité d'interface (140), **caractérisé en ce que** l'appareil mobile (100) est configuré pour recevoir de la part du système d'infodivertissement (20), par le biais de l'interface de données (90), la taille d'écran du système d'infodivertissement (20) dans l'unité d'une grandeur comparative, la taille d'écran étant exprimée par une longueur horizontale et une longueur verticale de l'écran, déterminer dans l'appareil mobile (100) la taille d'écran du programme d'application (170) exécuté dans l'appareil mobile (100) dans l'unité de la grandeur comparative, comparer la taille d'écran du système d'infodivertissement (20) à la taille de l'interface utilisateur du programme d'application (170) exécuté dans l'appareil mobile (100) et, en fonction de la comparaison, décider si des données d'image concernant l'interface utilisateur, et le cas échéant lesquelles, sont transmises de l'appareil mobile (100) au système d'infodivertissement (20) par le biais de l'interface de données (90), l'appareil mobile (100) étant configuré pour transmettre les données d'image qui modifient l'interface utilisateur de l'appareil mobile (100) au système d'infodivertissement (20) par le biais de l'interface de données (90) lorsqu'il résulte de la comparaison que la taille d'écran du système d'infodivertissement (20) est inférieure à l'interface utilisateur du programme d'application (170) exécuté dans l'appareil mobile (100) et le programme d'application (170) tient à disposition une interface utilisateur modifiée pour la taille d'écran du système d'infodivertissement (20), les tailles d'écran étant associées à des classes de mise en page à l'aide de leur grandeur dans l'unité de la grandeur comparative, les classes de mise en page représentant des écrans dont les tailles sont incluses dans des intervalles donnés et une interface utilisateur appropriée étant tenue à disposition pour chaque classe de mise en page.

5. Appareil mobile selon la revendication 4, **caractérisé en ce que** l'appareil mobile (100) est configuré pour transmettre les données d'image qui représentent entièrement l'interface utilisateur de l'appareil mobile (100) au système d'infodivertissement (20) par le biais de l'interface de données (90) lorsqu'il résulte de la comparaison que la taille d'écran du système d'infodivertissement (20) n'est pas inférieure à la taille de l'interface utilisateur du programme d'application (170) exécuté dans l'appareil mobile (100).

6. Appareil mobile l'une la revendication 4 ou 5, **caractérisé en ce que** l'appareil mobile (100) est configuré pour ne transmettre aucune donnée d'image concernant l'interface utilisateur n'est transmise au système d'infodivertissement (20) par le biais de l'interface de données (90) lorsqu'il résulte de la comparaison que la taille d'écran du système d'infodivertissement (20) est inférieure à la taille de l'interface utilisateur du programme d'application (170) exécuté dans l'appareil mobile (100) et que le programme d'application (170) ne tient à disposition aucune interface utilisateur modifiée pour la taille d'écran du système d'infodivertissement (20).

7. Système d'infodivertissement destiné à être disposé dans un véhicule (10), comprenant un écran (50) et une unité d'interface (60), le système d'infodivertissement (20) étant configuré pour coopérer avec un appareil mobile (100) possédant un écran (130), sur lequel est exécuté un programme d'application (170) qui représente une interface utilisateur sur l'écran (130) de l'appareil mobile (100) de telle sorte qu'une interface de données (90) entre l'appareil mobile (100) et le système d'infodivertissement (20) est formée par le biais de l'unité d'interface (60), **caractérisé en ce que** le système d'infodivertissement (20) est configuré pour déterminer la taille d'écran du système d'infodivertissement (20) dans l'unité d'une grandeur comparative, la taille d'écran étant exprimée par une longueur horizontale et une longueur verticale de l'écran, et la transmettre à l'appareil mobile (100) par le biais de l'interface de données (90) ainsi que pour recevoir, par le biais de l'interface de données (90), des données d'image mises à disposition par l'appareil mobile (100) et concernant l'interface utilisateur, l'appareil mobile (100) étant configuré pour transmettre les données d'image qui modifient l'interface utilisateur de l'appareil mobile (100) au système d'infodivertissement (20) par le biais de l'interface de données (90) lorsqu'il résulte de la comparaison que la taille d'écran du système d'infodivertissement (20) est inférieure à l'interface utilisateur du programme d'application (170) exécuté dans l'appareil mobile (100) et le programme d'application (170) tient à disposition une interface utilisateur modifiée pour la taille d'écran du système d'infodivertissement (20), les tailles d'écran étant associées à des classes de mise en page à l'aide de leur grandeur dans l'unité de la grandeur comparative, les classes de mise en page représentant des écrans dont les tailles sont incluses dans des intervalles donnés et une interface utilisateur appropriée étant tenue à disposition pour chaque classe de mise en page.
